# EUROPEAN PATENT APPLICATION

(11) **EP 3 770 536 A1**
(43) Date of publication of application: **27.01.2021**
(21) Application number: 19770738.3
(22) Date of filing: 27.02.2019
(51) Int. Cl.: F25B 41/06, B60H 1/32, F16K 15/18, F16K 31/68

(54) **POWER ELEMENT AND EXPANSION VALVE HAVING SAME**

(30) Priority: 20.03.2018 JP 2018051857
(71) Applicant: Fujikoki Corporation, Tokyo 158-0082 (JP)
(72) Inventor: YOKOTA Hiroshi, Tokyo 158-0082 (JP); TAKAHASHI Yusuke, Tokyo 158-0082 (JP)
(74) Representative: Ter Meer Steinmeister & Partner
(86) International application number: PCT/JP2019/007620
(87) International publication number: WO 2019/181409

(57) **Abstract**

[Object] To provide a power element that can suppress the deformation of a resin stopper member due to welding heat, and an expansion valve including the power element.

[Solution] In an expansion valve 1, an upper lid member 31, a receiving member 32, and a diaphragm 33 of a power element 30 are welded to one another at respective outer peripheral portions 31a, 32a, and 33a in such a manner as to be integrated into a unit. A resin stopper member 34 is positioned in a refrigerant inflow chamber 37 provided between the diaphragm 33 and the receiving member 32 and includes a flange portion 34b that is in contact with a circumferential edge portion 35a of a through-hole 35 provided in a central part of the receiving member 32. A radial distance D between a part S of the flange portion 34b that is in contact with the receiving member 32 and an outer circumferential end T of the outer peripheral portions 31a, 32a, and 33a is 6 mm or more.

## Description

### Technical Field

The present invention relates to an expansion valve which is used in a refrigeration cycle and including a temperature sensing mechanism, and to a power element included in the expansion valve.

### Background Art

Hitherto, an expansion valve including a temperature sensing mechanism that adjusts the volume of refrigerant flowing therethrough in accordance with the temperature has been used in a refrigeration cycle of an air conditioner and the like to be installed in an automobile (see PTL 1 and PTL 2, for example).

Such an expansion valve includes a valve main body and a power element serving as a valve-member-driving device mounted on the valve main body. The valve main body has a first refrigerant channel through where high-pressure refrigerant flows. The first refrigerant channel is provided with an inlet port, a valve chamber, a valve hole, and an outlet port, which are continuous with one another in that order. The valve main body further has a second refrigerant channel communicating with the power element. The valve main body contains a spherical valve member in the valve chamber. The valve member is pressed by a coil spring toward a valve seat provided at a valve-chamber-side opening of the valve hole. The valve hole receives a valve rod inserted therethrough. One end of the valve rod faces the coil spring via the valve member, and the other end of the valve rod is attached to the power element.

The power element includes an upper lid member and a receiving member, between which a diaphragm is held. The diaphragm is a thin plate and is elastically deformable when receiving a pressure. A pressure-actuation chamber is provided between the upper lid member and the diaphragm. A metal stopper member is positioned between the diaphragm and the receiving member. The stopper member has a receiving portion with which the other end of the valve rod is in contact. When the heat of the refrigerant flowing in the second refrigerant channel is transmitted to the pressure-actuation chamber of the power element via the stopper member and the diaphragm, gas filled in the pressure-actuation chamber expands. Correspondingly, the diaphragm deforms in such a manner as to bend toward the stopper member and drives the valve member via the stopper member and the valve rod, whereby the degree of opening between the valve member and the valve seat is controlled.

### Citation List

### Patent Literature

PTL 1: Japanese Patent No. 5100136
PTL 2: Japanese Unexamined Patent Application Publication No. 2016-196982

### Summary of Invention

### Technical Problem

There has been a demand for size reduction of such an expansion valve because of restrictions on the space and weight thereof that are imposed in view of installation into an automobile. If the size of the expansion valve is reduced, the distance between the second refrigerant channel and the power element is reduced. Therefore, the heat of the refrigerant is more likely to be transmitted to the pressure-actuation chamber. Consequently, the sensitivity of the power element to changes in refrigerant temperature is increased. Such a situation may lead to a phenomenon called hunting, in which the flow rate of the refrigerant fluctuates in a short cycle. The hunting phenomenon can be suppressed by employing a stopper member made of resin, which has low thermal conductivity, for optimizing the sensitivity to changes in refrigerant temperature.

A through-hole is provided in a central part of the receiving member of the power element. The stopper member includes a flange portion that is in contact with the circumferential edge portion of the through-hole. Therefore, the stopper member is prevented from dropping. The flange portion of the resin stopper member is desired to be widened outward satisfactorily so as to assuredly prevent the stopper member from dropping. However, the power element is formed by placing the upper lid member, the diaphragm, and the receiving member one on top of another and welding the outer peripheral portions thereof to one another in such a manner as to be integrated into a unit. Therefore, the stopper member may deform with heat generated during welding.

Accordingly, an object of the present invention is to provide a power element that can suppress the deformation of a resin stopper member due to welding heat, and an expansion valve including the power element.

### Solution to Problem

The present inventors have focused on a fact that the heat generated during welding is transmitted to the stopper member mostly through the receiving member. Hence, the present inventors have made thorough examinations about the influence of welding heat upon the stopper member by making a number of power elements including receiving members having different factors including shape, thickness, and so forth, together with simulations. Consequently, the present inventors have found a configuration that can effectively suppress the above influence, regardless of the shape, the thickness, and so forth of the receiving member and have reached the present invention.

To achieve the above object, a power element according to an aspect of the present invention includes a diaphragm, an upper lid member placed over a first surface of the diaphragm such that a pressure-actuation chamber is provided between the upper lid member and the diaphragm, a receiving member placed over a second surface of the diaphragm such that a refrigerant inflow chamber is provided between the receiving member and the diaphragm, and a resin stopper member positioned in the refrigerant inflow chamber. The receiving member has a through-hole in a central part. The stopper member includes a flange portion that is in contact with a circumferential edge portion of the through-hole provided in the receiving member. The upper lid member, the receiving member, and the diaphragm are welded to one another at respective outer peripheral portions in such a manner as to be integrated into a unit. A radial distance between a part of the flange portion that is in contact with the receiving member and an outer circumferential end of the outer peripheral portions is 6 mm or more.

In the present invention, it is preferable that a gap be produced between the diaphragm and the stopper member when a pressure in the pressure-actuation chamber and a pressure in the refrigerant inflow chamber are equal.

To achieve the above object, an expansion valve according to another aspect of the present invention includes a valve main body having a refrigerant channel, the refrigerant channel including a valve chamber and a valve hole; a valve member positioned in the valve chamber; a coil spring that presses the valve member toward a valve-chamber-side opening of the valve hole; a valve rod inserted through the valve hole and positioned so as to face the coil spring via the valve member; and a power element that drives the valve member via the valve rod. The power element is the above power element.

### Advantageous Effects of Invention

According to the present invention, the upper lid member, the receiving member, and the diaphragm are welded to one another at the respective outer peripheral portions in such a manner as to be integrated into a unit. Furthermore, the resin stopper member is positioned in the refrigerant inflow chamber provided between the diaphragm and the receiving member and includes the flange portion that is in contact with the circumferential edge portion of the through-hole provided in the central part of the receiving member. Furthermore, the radial distance between the part of the flange portion that is in contact with the receiving member and the outer circumferential end of the outer peripheral portions is 6 mm or more. Therefore, the welding heat to be transmitted to the stopper member through the receiving member is reduced. Thus, the deformation of the stopper member due to the welding heat can be suppressed.

### Brief Description of Drawings

[Fig. 1] Fig. 1 is a front view of an expansion valve according to a first embodiment of the present invention.
[Fig. 2] Fig. 2 is a vertical cross-sectional view of the expansion valve illustrated in Fig. 1.
[Fig. 3] Fig. 3 is a cross-sectional view of a power element included in the expansion valve illustrated in Fig. 1.
[Fig. 4] Fig. 4 is a cross-sectional view of a configuration according to a modification of the power element illustrated in Fig. 3.
[Fig. 5] Fig. 5 is a front view of an expansion valve according to a second embodiment of the present invention.
[Fig. 6] Fig. 6 is a vertical cross-sectional view of the expansion valve illustrated in Fig. 5.
[Fig. 7] Fig. 7 is a cross-sectional view of a power element included in the expansion valve illustrated in Fig. 5.

### Description of Embodiments

### (First Embodiment)

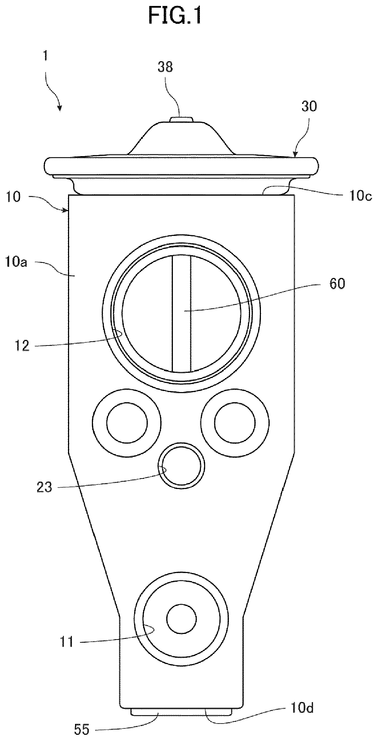

An expansion valve according to a first embodiment of the present invention will now be described with reference to Figs. 1 to 4. In the expansion valve according to the first embodiment, a power element is mounted on a valve main body by screwing.

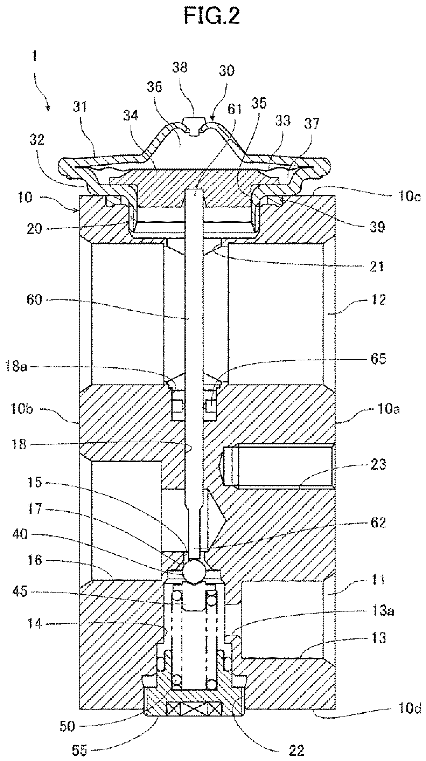

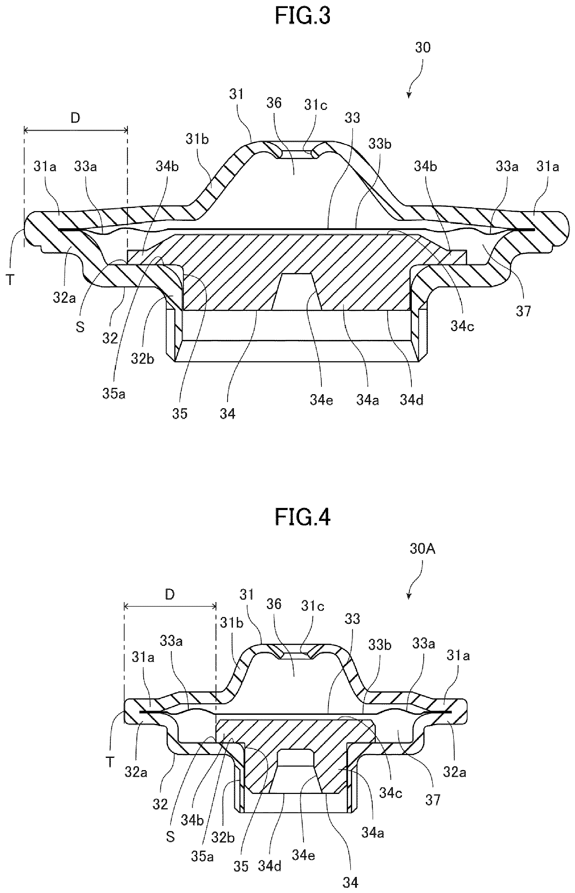

Fig. 1 is a front view of the expansion valve according to the first embodiment of the present invention. Fig. 2 is a vertical cross-sectional view of the expansion valve illustrated in Fig. 1. Fig. 3 is a cross-sectional view of the power element included in the expansion valve illustrated in Fig. 1. Fig. 4 is a cross-sectional view of a configuration according to a modification of the power element illustrated in Fig. 3. In the following description, the "upper/lower" side refers to the upper/lower side in the drawings.

As illustrated in Figs. 1 and 2, an expansion valve 1 according to the first embodiment includes a valve main body 10, a power element 30, a valve member 40, a support member 45, a coil spring 50, an adjustment screw 55, a valve rod 60, and a vibration-damping member 65.

The valve main body 10 is obtained by, for example, extruding aluminum (or an aluminum alloy) in a direction orthogonal to the plane of the page of Fig. 1 in such a manner as to form a substantially square pole and machining the extruded body. The valve main body 10 has a first refrigerant channel 11, a second refrigerant channel 12, a power-element-mounting portion 20, and an adjustment-screw-receiving portion 22.

The first refrigerant channel 11 includes an inlet port 13, a valve chamber 14, a valve hole 15, and an outlet port 16, which are continuous with one another in that order. The inlet port 13 is provided with an opening in a front face 10a of the valve main body 10. The inlet port 13 communicates with the valve chamber 14 from a lateral side thereof via a small-diameter hole 13a. The outlet port 16 is provided with an opening in a rear face 10b of the valve main body 10. The outlet port 16 communicates with the valve chamber 14 from the upper side thereof via the valve hole 15, which serves as an orifice. A valve seat 17 is provided at a valve-chamber-side opening of the valve hole 15.

The second refrigerant channel 12 is provided above the first refrigerant channel 11. The second refrigerant channel 12 has an inlet in the rear face 10b of the valve main body 10, and an outlet in the front face 10a. The second refrigerant channel 12 linearly extends through the valve main body 10 from the rear face 10b to the front face 10a.

The valve main body 10 has a connecting hole 18 extending vertically. The valve chamber 14, the valve hole 15, the connecting hole 18, and a pressure-equalizing hole 21 to be described below, have respective center axes that are aligned on one specific line. The connecting hole 18 includes a large-diameter portion 18a at an end thereof facing the second refrigerant channel 12.

The power-element-mounting portion 20 is a round columnar hole provided in an upper face 10c of the valve main body 10. The power-element-mounting portion 20 has an internal thread in the inner circumferential surface thereof. The pressure-equalizing hole 21 is provided in the bottom surface of the power-element-mounting portion 20. The pressure-equalizing hole 21 communicates with the second refrigerant channel 12. The direction of the center axis of the power-element-mounting portion 20 (the vertical direction in Fig. 2) is orthogonal to the direction in which the second refrigerant channel 12 extends (the horizontal direction in Fig. 2).

The adjustment-screw-receiving portion 22 is a circular hole provided in a lower face 10d of the valve main body 10. The adjustment-screw-receiving portion 22 communicates with the valve chamber 14. The adjustment-screw-receiving portion 22 has an internal thread in the inner circumferential surface thereof. The opening of the adjustment-screw-receiving portion 22 is closed by the adjustment screw 55 to be described below, whereby the valve chamber 14 is closed to the outside.

The front face 10a of the valve main body 10 has a fitting hole 23 for fitting the valve main body 10 to an unillustrated evaporator or any other component. The fitting hole 23 may have an internal thread in the inner circumferential surface thereof.

As illustrated in Fig. 3, the power element 30 includes an upper lid member 31, a receiving member 32, a diaphragm 33, and a stopper member 34. The upper lid member 31, the receiving member 32, and the diaphragm 33 are each made of, for example, metal such as stainless steel. The stopper member 34 is made of, for example, resin such as polyphenylene sulfide (PPS), syndiotactic polystyrene (SPS), or polyamide imide (PAI). The members forming the power element 30 may each be made of another material as long as not conflicting with the object of the present invention.

The upper lid member 31 includes an annular outer peripheral portion 31a, and a substantially conical inner portion 31b continuous with the inner circumferential edge of the outer peripheral portion 31a. The inner portion 31b has a working-gas-injection hole 31c in a central part thereof.

The receiving member 32 includes a stepped annular outer peripheral portion 32a having a through-hole 35 in a central part thereof, and a cylindrical portion 32b continuous with the inner circumferential edge of the outer peripheral portion 32a (a circumferential edge portion 35a of the through-hole 35) and extending downward. The cylindrical portion 32b has an external thread in the outer circumferential surface thereof. The external thread is in mesh with the internal thread of the power-element-mounting portion 20.

The diaphragm 33 includes an annular outer peripheral portion 33a having a wave-shaped cross section, and a circular flat central portion 33b continuous with the inner circumferential edge of the outer peripheral portion 33a. The diaphragm 33 is held between the upper lid member 31 and the receiving member 32.

The outer peripheral portion 31a of the upper lid member 31 is placed on the upper surface (one surface) of the outer peripheral portion 33a of the diaphragm 33, and the outer peripheral portion 32a of the receiving member 32 is placed on the lower surface (the other surface) of the outer peripheral portion 33a of the diaphragm 33. With the above members being placed one on top of another, the outer peripheral portion 31a of the upper lid member 31, the outer peripheral portion 32a of the receiving member 32, and the outer peripheral portion 33a of the diaphragm 33 are welded to one another over the entire circumferences thereof (girth welding). The welding integrates the upper lid member 31, the receiving member 32, and the diaphragm 33 into a unit. The method of welding is preferably either of TIG (tungsten-inert-gas) welding and laser welding, which are suitable for local processing.

The upper lid member 31 and the diaphragm 33 define a pressure-actuation chamber 36 therebetween. The pressure-actuation chamber 36 is to be injected with a working gas through the working-gas-injection hole 31c. The working-gas-injection hole 31c is closed by a plug 38 after the working gas is injected. The receiving member 32 and the diaphragm 33 define a refrigerant inflow chamber 37 therebetween.

The stopper member 34 includes a round columnar portion 34a having a slightly smaller diameter than the through-hole 35, and an annular flange portion 34b provided at the upper end of the round columnar portion 34a and having a larger diameter than the through-hole 35. The round columnar portion 34a of the stopper member 34 is inserted into the cylindrical portion 32b of the receiving member 32. The flange portion 34b is positioned in the refrigerant inflow chamber 37.

The flange portion 34b is in contact with the circumferential edge portion 35a of the through-hole 35 provided in the receiving member 32, whereby the stopper member 34 is prevented from dropping from the through-hole 35.

In the present embodiment, the upper lid member 31, the receiving member 32, and the diaphragm 33 are welded to one another at the respective outer peripheral portions 31a, 32a, and 33a in such a manner as to be integrated into a unit. A radial distance D between a part S of the flange portion 34b that is in contact with the receiving member 32 and an outer circumferential end T of the outer peripheral portions 31a, 32a, and 33a is 6 mm or more. As a result of examinations conducted with a number of samples, the present inventors have found that the deformation of the stopper member 34 due to welding heat generated in the process of manufacturing the power element can be suppressed by setting the distance D to 6 mm or more.

An upper surface 34c of the stopper member 34 faces the central portion 33b of the diaphragm 33. When the pressure in the pressure-actuation chamber 36 is increased, the diaphragm 33 bends and the central portion 33b thereof pushes down the upper surface 34c of the stopper member 34. A lower surface 34d of the stopper member 34 has a hole-shaped receiving portion 34e. The receiving portion 34e receives an upper end 61 (the other end) of the valve rod 60 to be described below inserted therethrough.

In the present embodiment, in a situation such as the one before the working-gas-injection hole 31c is closed by the plug 38, that is, when the pressure in the pressure-actuation chamber 36 and the pressure in the refrigerant inflow chamber 37 are equal, the power element 30 is configured so that a gap is produced between the diaphragm 33 and the stopper member 34. Therefore, the transmission of welding heat to the stopper member 34 through the diaphragm 33 can be prevented. If the above gap is not produced, the diaphragm 33 presses the stopper member 34 against the receiving member 32. Consequently, the stopper member 34 may be highly affected by the heat of the receiving member 32. Therefore, the above gap is produced. Thus, the deformation of the stopper member 34 due to welding heat can be suppressed more effectively.

The external thread of the receiving member 32 of the power element 30 is made to mesh with the internal thread of the power-element-mounting portion 20. That is, the power element 30 is mounted on the valve main body 10 by screwing. The power element 30 is mounted on the valve main body 10 such that an annular seal member 39 provided between the receiving member 32 and the valve main body 10 is compressed. When the power element 30 is mounted on the power-element-mounting portion 20, the second refrigerant channel 12 and the refrigerant inflow chamber 37 communicate with each other via the pressure-equalizing hole 21.

The valve member 40 is a spherical member positioned in the valve chamber 14.

The support member 45 supports the valve member 40 such that the valve member 40 faces the valve seat 17. The valve member 40 may be configured to be fixed to the support member 45.

The coil spring 50 is positioned between the support member 45 and the adjustment screw 55 in such a manner as to be compressed therebetween. The coil spring 50 presses the valve member 40 toward the valve seat 17 via the support member 45.

The adjustment screw 55 is screwed into the adjustment-screw-receiving portion 22 of the valve main body 10. The elastic force (pressing force) exerted by the coil spring 50 is adjustable by adjusting the amount of screwing of the adjustment screw 55.

The valve rod 60 extends through the valve hole 15, the connecting hole 18, and the pressure-equalizing hole 21 provided in the valve main body 10. A lower end 62 (one end) of the valve rod 60 is in contact with the valve member 40 and positioned so as to face the coil spring 50 via the valve member 40 and the support member 45. The upper end 61 of the valve rod 60 is inserted into the receiving portion 34e of the stopper member 34 included in the power element 30. Thus, the valve member 40 is driven by the power element 30 via the valve rod 60.

The vibration-damping member 65 is positioned in the large-diameter portion 18a of the connecting hole 18. The vibration-damping member 65 includes, for example, a plurality of leaf-spring members and presses the outer circumferential surface of the valve rod 60. Thus, the valve rod 60 and the valve member 40 are prevented from vibrating.

Now, the behavior of the expansion valve 1 will be described. In the expansion valve 1, refrigerant flows into the inlet port 13, is expanded while flowing through the valve chamber 14 and the valve hole 15, and is discharged from the outlet port 16 to the evaporator (not illustrated). The refrigerant having flowed through the evaporator flows through the second refrigerant channel 12 from the inlet thereof to the outlet thereof and returns into a compressor (not illustrated). In this process, some of the refrigerant flowing through the second refrigerant channel 12 flows through the pressure-equalizing hole 21 into the refrigerant inflow chamber 37 of the power element 30. Then, in accordance with the change in the temperature of the refrigerant having flowed into the refrigerant inflow chamber 37, the pressure in the pressure-actuation chamber 36 changes. The diaphragm 33 deforms in accordance with the pressure in the pressure-actuation chamber 36 and moves the stopper member 34 up or down. The movement of the stopper member 34 is transmitted to the valve member 40 via the valve rod 60. Thus, the expansion valve 1 automatically adjusts the flow rate in accordance with the temperature of the refrigerant.

To summarize, in the expansion valve 1, the upper lid member 31, the receiving member 32, and the diaphragm 33 included in the power element 30 are welded to one another at the respective outer peripheral portions 31a, 32a, and 33a in such a manner as to be integrated into a unit. The resin stopper member 34 is positioned in the refrigerant inflow chamber 37 provided between the diaphragm 33 and the receiving member 32 and includes the flange portion 34b that is in contact with the circumferential edge portion 35a of the through-hole 35 provided in the central part of the receiving member 32. The radial distance D between the part S of the flange portion 34b that is in contact with the receiving member 32 and the outer circumferential end T of the outer peripheral portions 31a, 32a, and 33a is 6 mm or more. Therefore, the welding heat to be transmitted to the stopper member 34 through the receiving member 32 can be reduced. Thus, the deformation of the stopper member 34 due to the welding heat can be suppressed.

Likewise, as illustrated in Fig. 4, in a power element 30A obtained by reducing the overall size of the above power element 30, the deformation of the stopper member 34 due to welding heat generated in the process of manufacturing the power element can be suppressed by setting the radial distance D between the part S of the flange portion 34b that is in contact with the receiving member 32 and the outer circumferential end T of the outer peripheral portions 31a, 32a, and 33a to 6 mm or more.

### (Second Embodiment)

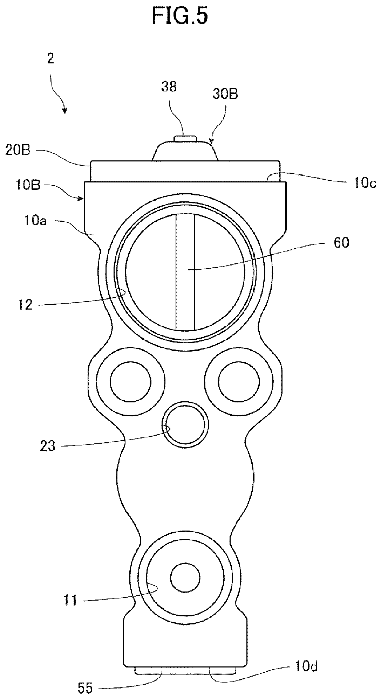

An expansion valve according to a second embodiment of the present invention will now be described with reference to Figs. 5 to 7. In the expansion valve according to the second embodiment, a power element is mounted on a valve main body by caulking.

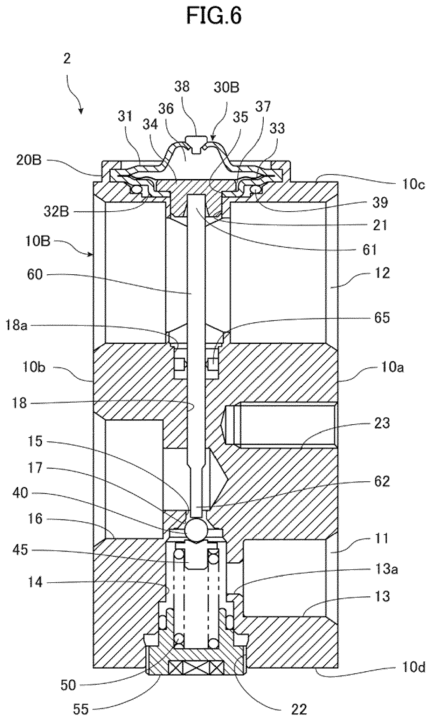

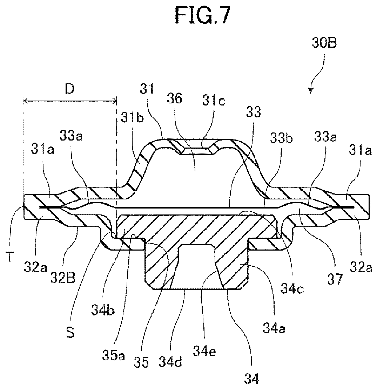

Fig. 5 is a front view of the expansion valve according to the second embodiment of the present invention. Fig. 6 is a vertical cross-sectional view of the expansion valve illustrated in Fig. 5. Fig. 7 is a cross-sectional view of the power element included in the expansion valve illustrated in Fig. 5. In the following description as well, the "upper/lower" side refers to the upper/lower side in the drawings. Furthermore, members and the like having the same functions as those described in the first embodiment are denoted by corresponding ones of the reference numerals used in the first embodiment, and description of such members and the like is omitted.

As illustrated in Figs. 5 and 6, an expansion valve 2 according to the second embodiment includes a valve main body 10B, a power element 30B, the valve member 40, the support member 45, the coil spring 50, the adjustment screw 55, the valve rod 60, and the vibration-damping member 65.

The valve main body 10B has the same configuration as the valve main body 10 according to the first embodiment, except that the power-element-mounting portion 20 as a round columnar hole with an inner circumferential surface having an internal thread is replaced with a power-element-mounting portion 20B employing a caulking structure.

The power-element-mounting portion 20B is integrated with an upper face 10c of the valve main body 10B. Before the power element 30B is mounted, the power-element-mounting portion 20B has a cylindrical shape. After the power element 30B is placed into the power-element-mounting portion 20B, an end of the power-element-mounting portion 20B that extends upward is folded inward to be caulked to the outer peripheral portion of the power element 30B. Thus, the power element 30B is mounted on the valve main body 10B.

The power element 30B has the same configuration as the power element 30 according to the first embodiment, except that the receiving member 32 including the outer peripheral portion 32a and the cylindrical portion 32b is replaced with a receiving member 32B including only a stepped outer peripheral portion 32a.

In the power element 30B, as with the case of the first embodiment, the radial distance D between the part S of the flange portion 34b that is in contact with the receiving member 32 and the outer circumferential end T of the outer peripheral portions 31a, 32a, and 33a is 6 mm or more. Therefore, the deformation of the stopper member 34 due to welding heat generated in the process of manufacturing the power element can be suppressed.

While some embodiments of the present invention have been described above, the present invention is not limited thereto. The aforementioned embodiments to which addition, deletion, and design change of constituents are applied, as appropriate, by a person skilled in the art, and the features of the embodiments combined together, as appropriate, are also included in the scope of the present invention as long as not conflicting with the spirit of the present invention.

### Reference Signs List

- 1, 2: expansion valve
- 10, 10B: valve main body
- 10a: front face
- 10b: rear face
- 10c: upper face
- 10d: lower face
- 11: first refrigerant channel
- 12: second refrigerant channel
- 13: inlet port
- 14: valve chamber
- 15: valve hole
- 16: outlet port
- 17: valve seat
- 18: connecting hole
- 18a: large-diameter portion
- 20, 20B: power-element-mounting portion
- 21: pressure-equalizing hole
- 22: adjustment-screw-receiving portion
- 23: fitting hole
- 30, 30A, 30B: power element
- 31: upper lid member
- 31a: outer peripheral portion
- 31b: inner portion
- 31c: working-gas-injection hole
- 32, 32B: receiving member
- 32a: outer peripheral portion
- 32b: cylindrical portion
- 33: diaphragm
- 33a: outer peripheral portion
- 33b: central portion
- 34: stopper member
- 34a: round columnar portion
- 34b: flange portion
- 34c: upper surface
- 34d: lower surface
- 34e: receiving portion
- 35: through-hole
- 35a: circumferential edge portion
- 36: pressure-actuation chamber
- 37: refrigerant inflow chamber
- 38: plug
- 39: seal member
- 40: valve member
- 45: support member
- 50: coil spring
- 55: adjustment screw
- 60: valve rod
- 61: upper end
- 62: lower end
- 65: vibration-damping member
- S: part of flange portion that is in contact with receiving member
- T: outer circumferential end
- D: distance

## Claims

1. A power element comprising:
a diaphragm;
an upper lid member placed over a first surface of the diaphragm such that a pressure-actuation chamber is provided between the upper lid member and the diaphragm;
a receiving member placed over a second surface of the diaphragm such that a refrigerant inflow chamber is provided between the receiving member and the diaphragm; and
a resin stopper member positioned in the refrigerant inflow chamber,
wherein the receiving member has a through-hole in a central part,
wherein the stopper member includes a flange portion that is in contact with a circumferential edge portion of the through-hole provided in the receiving member,
wherein the upper lid member, the receiving member, and the diaphragm are welded to one another at the respective outer peripheral portions in such a manner as to be integrated into a unit, and
wherein a radial distance between a part of the flange portion that is in contact with the receiving member and an outer circumferential end of the outer peripheral portions is 6 mm or more.

2. The power element according to Claim 1,
configured so that a gap is produced between the diaphragm and the stopper member when a pressure in the pressure-actuation chamber and a pressure in the refrigerant inflow chamber are equal.

3. An expansion valve comprising:
a valve main body having a refrigerant channel, the refrigerant channel including a valve chamber and a valve hole;
a valve member positioned in the valve chamber;
a coil spring that presses the valve member toward a valve-chamber-side opening of the valve hole;
a valve rod inserted through the valve hole and positioned so as to face the coil spring via the valve member; and
a power element that drives the valve member via the valve rod,
wherein the power element is the power element according to Claim 1 or 2.
